# EUROPEAN PATENT APPLICATION

(11) **EP 3 663 122 A1**
(43) Date of publication of application: **10.06.2020**
(21) Application number: 18209979.6
(22) Date of filing: 04.12.2018
(51) Int. Cl.: B60L 9/00, E21C 33/00, E21F 17/06, B65H 54/00, H02G 11/02, B60T 1/10, E21F 13/02, B66D 1/50

(54) **ARRANGEMENT IN UNDERGROUND MINING MACHINE, AND METHOD**

(71) Applicant: Sandvik Mining and Construction Oy, 33311 Tampere (FI)
(72) Inventor: Haikio, Sami, 20101 Turku (FI); Aho, Heikki, 20101 Turku (FI)
(74) Representative: Sandvik

(57) **Abstract**

An arrangement and method of underground mobile mining machine (M) for cable reeling. The arrangement comprises a reel (1), and hydraulic components, comprising: a hydraulic motor (5) connected to and for rotating the reel, a tension control valve manifold (4) configured to control tension of the cable, a pump (8) hydraulically coupled to the hydraulic motor (5) by a reeling-in line (26) and a reeling out line (27), the pump arranged to control pressure fluid flow and direction, a control device (10) arranged to control displacement and the pumping direction of the pump (8), a pump proportional valve (11) arranged to control displacement and delivery of the pump (8), and connected to the control device (10), a first throttle (22) arranged between the pump proportional valve (11) and the control device (10), a second throttle (23) connected to the control device (10). The hydraulic components establishes a closed hydraulic system, and the pump (8) is connected to a system (33) configured to generate a braking moment counteracting a moment caused by a cable (25) unwinding from the reel (1).

## Description

### BACKGROUND

The invention relates to an arrangement of underground mobile mining machine for cable reeling.

The invention further relates to a method for cable reeling of an electrically driven underground mining machine.

In electrically driven underground mining machines, controlling cable reeling, i.e. winding and unwinding of a cable extending from the machine to a power source has an important role.

Traditionally the cable reeling in underground mining machines is realized by an open or half-open hydraulic circuit systems. In these systems, the reel speed cannot be directly controlled. The reel speed is a result of the tension control. Certain conditions are problematic, for example beginning of driving and reversal of driving direction, as well as sudden acceleration of the machine. In these situations, mechanical friction and inertia of the reel may disrupt the control.

It is also known applications using mechanical feedback from machine motion in controlling cable reeling. In these applications an exact controlling may be difficult as the cable speed is linked to the transmission of the machine. For example, if the wheels are slipping, the cable speed is not matched to the ground speed of the machine but it is matched to the speed of the slipping wheels. This will either cause over-tensioning of the cable, or pay out loose cable depending of driving direction.

Inaccuracy of the tension control causes unnecessary elongation and wear in the cable, which reduces the lifetime of the expensive cable.

The poor controllability of the reel may also cause a whip-lash effect when a loose cable is tensioned. Typically, this happens when the reeling system is activated and the loose cable is reeled in before driving begins. Whip-lash effect will cause a risk of the cable hitting personnel near the cable. Cable hitting tunnel walls and possible nearby equipment may damage the cable. The whip-lash happens when the reel initially is stationary. Torque needed for starting the reeling is higher than in running condition. A rather high pressure level is needed to start the rotation of the reel. Then the torque and friction condition improves when rotation starts, resulting undesired rotational acceleration of the reel. This leads to the uncontrolled whip-lash.

### BRIEF DESCRIPTION

Viewed from a first aspect, there can be provided an arrangement of underground mobile mining machine for cable reeling, the arrangement comprising a reel, and hydraulic components, comprising: a hydraulic motor connected to and for rotating the reel, a tension control valve manifold configured to control tension of the cable, a pump hydraulically coupled to the hydraulic motor by a reeling-in line and a reeling-out line, the pump arranged to control pressure fluid flow and direction, a control device arranged to control displacement and the pumping direction of the pump, a pump proportional valve arranged to control displacement and delivery of the pump, and connected to the control device, a first throttle arranged between the pump proportional valve and the control device, a second throttle connected to the control device, the hydraulic components establishing a closed hydraulic system, and wherein the pump being connected to a system configured to generate a braking moment counteracting a moment caused by a cable unwinding from the reel.

Thereby an arrangement providing at least one of the next advantages may be achieved: precise controllability, avoiding the whip-lash effect, possibility to unwind the reel without tensioning the cable, low energy consumption, and a compact structure of the arrangement.

Viewed from a further aspect, there can be provided a method for cable reeling of an electrically driven underground mining machine, in which method the cable is wound by rotating a reel in a first direction by a hydraulic motor coupled thereto, the hydraulic motor being pressurized by a pump, and unwound from the reel by allowing the reel to rotate in an opposite direction in a braked condition by using the hydraulic motor as a hydraulic pump, the method comprising
- during unwinding, generating hydraulic pressure to pressure fluid in the hydraulic motor,
- receiving said pressurized pressure fluid in the pump for driving the pump
- operating by the pump a system configured to generate a braking moment, and
- converting said hydraulic pressure into electric, mechanical and/or pressure fluid energy in said system.

Thereby a method providing at least one of the next advantages may be achieved: precise controllability, avoiding the whip-lash effect, possibility to free cable unwinding from the reel, and low energy consumption.

The arrangement and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Same control principles are possible to use in other reeling solutions in mobile mining machinery, for example hoses stored on a reel and arranged for supplying fluid(s), such as air, water etc.

The hydraulic circuit of the arrangement is basically a hydrostatic closed loop circuit. In the circuit, the flow and direction of fluid is controlled by adjusting control piston of the pump. An electrical pump controller with a mechanical or electric feed-back linkage of the pump wash-plate angle may be used. In some embodiments, there is no feed-back linkage at all. A further valve system is added to the pump control for creating a tension control. The tension control valve system creates a control pressure which is used to adjust the pump control piston angle. The adjustment has a range from maximum positive to maximum negative, providing means to reverse the flow direction of pressure fluid.

This valve system overrides the speed-control when a desired cable tension is met. The tension control valves are preferably electro-proportional ones that make it possible to fine-tune the tension with the driving conditions of the machine.

A braking moment is created when the cable is pulled out from the reel by the machine travelling away from the cable anchoring point. The braking moment is created with the pump operating as a hydraulic motor and a system for generating braking moment and driven by the pump. The system for generating braking moment may comprise, for instance, an electric generator or mechanical transmission capable of recovering the braking energy. In an embodiment, the electric motor operating the pump is also arranged to operate as a generator for recovering the braking energy.

During normal driving of the machine, the pump controller (speed control) is set to a maximum inwards reel speed. The tension control will then override the speed control when the cable tension level is achieved. Equilibrium between the speed and tension control is found and this sets the correct speed of the reel. During reversal of the machine travelling direction, the control pressure from tension control valves forces the pump to reverse the pressure medium flow to maintain the mentioned equilibrium.

The pressure level may be adjusted by driving conditions of the machine, such as speed, acceleration etc. Furthermore, the diameter of the reel changes as the amount of cable on the reel is changing. The compensation may be realized by varying the pressure level of the system to maintain constant tension in the cable.

During acceleration and deceleration of the machine the rotational inertia of the reel is compensated by varying the pressure level. The torque generated by the reel motor is directly proportional to the system pressure differential over the motor.

The arrangement and method may have a very precise speed control which is insensitive to variations in the pressure and motor torque. This may require a feed-back from a pump control device. This feature may be used during service of the arrangement, e.g. when the cable is changed. The cable reel may be rotated with precise speed control in both directions without starting torque and starting friction levels affecting to the control. This is achieved by controlling pump proportional valves with e.g. a joystick and setting the cable tension to a very high but still safe level.

### BRIEF DESCRIPTION OF FIGURES

Some embodiments illustrating the present disclosure are described in more detail in the attached drawings, in which

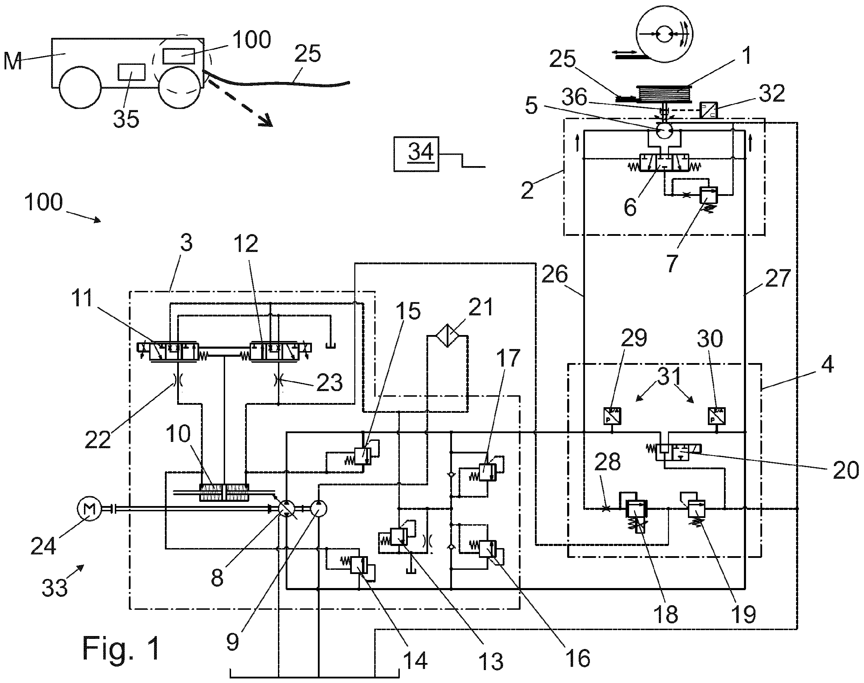

Figure 1 is a schematic view of an arrangement and method for controlling cable reeling.

In the figure, some embodiments are shown simplified for the sake of clarity. Similar parts are marked with the same reference numbers in the figures.

### DETAILED DESCRIPTION

Figure 1 is a schematic view of an arrangement and method for controlling cable reeling of an underground mobile mining machine M.

The underground mobile mining machine M may be any type of a mining vehicle or a construction vehicle. In mines and at other work sites different type of vehicles are used. The vehicles may be provided with one or more working devices for executing designed work tasks at the work site.

The vehicle may be a wheel loader, a transport vehicle or dumper, a rock drilling rig, an excavator or a lifting machine, for example.

The underground mobile mining machine M is an electrically driven machine that comprises at least one electric motor 35 that is connected by an electric cable 25 to a source of electric power (not shown).

The arrangement 100 for controlling reeling of said cable 25 comprises a reel 1 in which the cable is attached, and hydraulic components.

A rotational axis 36 of the reel 1 is arranged horizontally. Horizontal axis allows the cable enter the reel in wider angles, even from front of the machine.

However, in another embodiments, the rotational axis 36 may be vertically arranged. Vertically arranged axis typically demands a storage drum and a spooling system.

A hydraulic motor 5 is connected to and for rotating the reel 1 in a winding and an unwinding directions.

A tension control valve manifold 4 is configured to control tension of the cable 25 and keep the tension in predetermined range of tension values and reel is released with valve 20 if needed.

A pump 8 is hydraulically coupled to the hydraulic motor 5 for driving the same by a reeling in line 26 and a reeling out line 27. The pump 8 is arranged to create pressure fluid flow in the hydraulic motor 5. The pump is driven by a drive unit 24, such as an electric motor. In an embodiment, the electric motor 35 is arranged to operate as the drive unit 24.

A control device 10, such as a control piston or a control vane, is arranged to control displacement and the pumping direction of the pump 8. In the embodiment shown in Figure 1, the control device 10 is a control piston. A pump proportional valve 11 is connected to a first chamber of the control piston for controlling through the control piston displacement and thus the delivery of the pump 8.

In an embodiment, the arrangement may also comprise a second pump proportional valve 12, arranged parallel with the (first) pump proportional valve 11 and connected to the control device 10. In the embodiment shown in Figure 1, the second pump proportional valve 12 is connected to a second chamber of the control piston.

A first throttle 22 may be arranged between the pump proportional valve 11 and the first chamber of the control piston. In embodiments comprising the second pump proportional valve 12, a second throttle 23 may connected between the second pump proportional valve 12 and a second chamber, opposite to the first chamber, of the control piston.

In an embodiment, the pump 8, the control device 10, the proportional valve (s) 11, 12, and the throttle (s) 22, 23 are arranged in a single element 3 that may be called as a pump assembly.

The hydraulic components establish a closed hydraulic system. The pump 8 is connected to a system 33 configured to generate a braking moment counteracting a moment caused by a cable 25 unwinding form the reel 1. In an embodiment, the system 33 is realized by the drive unit 24 that comprises an electric motor, which is able to function as an electric generator. In another embodiment, the system 33 comprises a separate electric generator for converting the braking energy into electric energy. In still another embodiment, the system 33 comprises a transmission for converting the braking energy into mechanical or pressure fluid energy. Thus the system 33 may convert the braking energy to usable form of energy, not wasting it all as heat.

In the embodiment shown in Figure, the tension control valve manifold 4 comprises a tension control valve 18 connected to the reeling-in line 26. A third throttle 28 is arranged between the tension control valve 18 and the reeling-in line 26. The tension control valve 18 is monitoring and limiting pressure in the reeling-in line 26. Said pressure is proportional to the tension of the cable 25. Thus the tension control valve 18 limits the maximum cable tension in a predetermined tension value.

The tension control valve manifold 4 may also comprise one or more pressure measuring device(s), such as a first pressure measuring device 29 adapted to measure pressure in the reeling-in line 26, and a second pressure measuring device 30 adapted to measure pressure in a reeling-out line 27.

In another embodiment, the pressure measuring devices 29, 30 have means 31 for creating electrical signal proportional to the respective pressure, and an electrical transmitter. The pump proportional valve 11 is an electrically controlled valve and electrically connected to at least one of said first and second pressure measuring devices 29, 30. In this embodiment, the tension control valve 18 may be excluded.

According to an aspect, the arrangement may comprise a length monitoring means 32 configured to monitor the amount of the cable 25 on the reel. The length monitoring means 32 is configured to create a length information, such as an electrical signal, based on the amount of the cable 25 on the reel. Based on the length information, a control unit 34 of the arrangement is adapted to vary the pressure level of the hydraulic motor 5.

According to an aspect, in the method the cable 25 is wound on the reel 1 by rotating the reel 1 in a first direction by the hydraulic motor 5 coupled thereto. The hydraulic motor 5 is run by the pump 8.

When the cable 25 is unwound from the reel 1, the reel 1 is allowed to rotate in an opposite direction, not freely but in a braked condition. During unwinding, the hydraulic motor 5 acts as a hydraulic pump that generates hydraulic pressure to pressure fluid in the hydraulic motor 5. Said pressurized pressure fluid drives the pump 8 that operates a system 33 configured to generate the braking moment for constraining the rotation of the reel 1 and tensioning the cable 25. The system converts the hydraulic pressure into electric, mechanical and/or pressure fluid energy.

In an embodiment of the method, during unwinding of the cable 25, the pressure fluid used for driving the pump 8 is returned back from the pump 8 to the hydraulic motor 5.

In an embodiment of the method, during winding the cable 25 on the reel 1, it is first driven the pump 8 at its maximum flow for motor to provide the high speed to reel. Following the desired tension level of the cable 25 being achieved, the delivery of the pump 8 is limited and controlled such that equilibrium between said delivery and said tension is achieved and maintained.

According to an aspect, the arrangement may have at least two operational stages: normal operational stage for winding and unwinding the cable 25 during mining operations of the underground mobile mining machine M, and a service stage. In the service stage, the cable reel 1 may be rotted in a controlled manner and directly controlled by the operator during service operations.

In an embodiment, the controlling of the speed of the reel 1 in the service stage is realized by pump proportional valve(s) 11, 12 that is/are controlled through e.g. a joystick (not shown).

In an embodiment, a flushing spool 6 and a flushing relief 7 are included in the arrangement for selecting a low-pressure side of working circuit (reeling lines 26, 27) for flushing. The flushing spool 6 and the flushing relief 7 may be arranged together with the hydraulic motor 5 in a single motor assembly 2.

In an embodiment, the arrangement comprises a booster pump 9 that is used for generating a pilot pressure and filling the hydrostatic circuit.

The arrangement may comprise a boost pressure relief valve 13 for setting the pressure level of boost and low pressure side of the hydrostatic circuit.

In an embodiment, the arrangement comprises pressure cut-off valves 14, 15 arranged to limit maximum working pressure by forcing the control piston 10 towards middle point thereof, and thus towards smaller displacement in the pump 8.

The arrangement preferably comprises high-pressure relief valves 16, 17 that are protecting the arrangement against sudden over-pressurization in case of system overload or malfunction of cut-off valve 14, 15.

A control pressure relief valve 19 may be used for limiting maximum control pressure.

In an embodiment, the arrangement comprises a free circulation valve 20 that makes it possible to release the reel 1 to be freely rotated.

The arrangement preferably comprises a filter 21 configured to filter pressure fluid circuiting in the arrangement.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: reel
- 2: motor assembly
- 3: pump assembly
- 4: tension control valve manifold
- 5: hydraulic motor
- 6: flushing spool
- 7: flushing relief
- 8: pump
- 9: booster pump
- 10: control device
- 11: pump proportional valve
- 12: second pump proportional valve
- 13: boost pressure relief valve
- 14: pressure cut-off valve
- 15: pilot relief valve
- 16: high-pressure relief valve
- 17: high-pressure relief valve
- 18: tension control valve
- 19: control pressure relief valve
- 20: free circulation valve
- 21: filter
- 22: first throttle
- 23: second throttle
- 24: drive unit
- 25: cable
- 26: reeling-in line
- 27: reeling-out line
- 28: third throttle
- 29: first pressure measuring device
- 30: second pressure measuring device
- 31: means for creating electrical signal
- 32: length monitoring means
- 33: system for generating braking moment
- 34: control unit
- 35: electric motor
- 36: reel axle

- 100: arrangement
- M: underground mobile mining machine

## Claims

1. An arrangement of underground mobile mining machine (M) for cable reeling, the arrangement comprising
- a reel (1), and hydraulic components, comprising:
- a hydraulic motor (5) connected to and for rotating the reel,
- a tension control valve manifold (4) configured to control tension of the cable,
- a pump (8) hydraulically coupled to the hydraulic motor (5) by a reeling-in line (26) and a reeling-out line (27), the pump arranged to control pressure fluid flow and direction,
- a control device (10) arranged to control displacement and the pumping direction of the pump (8),
- a pump proportional valve (11) arranged to control displacement and delivery of the pump (8), and connected to the control device (10),
- a first throttle (22) arranged between the pump proportional valve (11) and the control device (10),
- a second throttle (23) connected to the control device (10),
- the hydraulic components establishing a closed hydraulic system, and wherein
- the pump (8) being connected to a system (33) configured to generate a braking moment counteracting a moment caused by a cable (25) unwinding from the reel (1).

2. The arrangement as claimed in claim 1, wherein the underground mobile mining machine (M) is an electrically driven machine and the cable (25) is an electric cable arranged for supplying electrical energy for use of said mining machine (M).

3. The arrangement as claimed in claim 1, wherein the cable (25) is a hose for supplying fluid(s) and stored on a reel.

4. The arrangement as claimed in any of the preceding claims, wherein the tension control valve manifold (4) comprises a tension control valve (18) and a third throttle (28), said tension control valve (18) being arranged to monitor pressure in the reeling-in line (26), said pressure being proportional to the tension of the cable.

5. The arrangement as claimed in any of claims 1 - 3, wherein the tension control valve manifold (4) comprises a first pressure measuring device (29) adapted to measure pressure in the reeling in line (26), and a second pressure measuring device (30) adapted to measure pressure in the reeling-out line (27), wherein
said pressure measuring devices (29, 30) have means (31) for creating electrical signal proportional to the respective pressure, and an electrical transmitter, wherein
the pump proportional valve (11) is an electrically controlled valve, being electrically connected to at least one of said first and second pressure measuring devices (29, 30).

6. The arrangement as claimed in any of the preceding claims, comprising a second pump proportional valve (12), arranged to control displacement and delivery of the pump (8), and connected to the control device (10).

7. The arrangement as claimed in any of the preceding claims, wherein the system for generating braking moment (33) comprises an electric generator for converting the braking energy into electric energy.

8. The arrangement as claimed in claim 7, wherein a drive unit (24) arranged to drive the pump (8) is an electric motor, and wherein said electric motor is arranged to operate as the electric generator for generating braking moment (33).

9. The arrangement as claimed in any of the preceding claims, wherein the system for generating braking moment (33) comprises a transmission for converting the braking energy into mechanical or pressure fluid energy.

10. The arrangement as claimed in any of the preceding claims, comprising
- a length monitoring means (32) configured to monitor the amount of the cable (25) on the reel, and for creating a length information based on the amount of the cable (25) on the reel, and further comprising
- a control unit(34) adapted to varying the pressure level of the hydraulic motor (5) based on the length information.

11. The arrangement as claimed in any of the preceding claims, wherein the control device (10) comprises a control piston,
- the pump proportional valve (11) being connected to a first chamber of the control piston,
- the first throttle (22) arranged between the pump proportional valve (11) and the first chamber of the control piston (10), and
- the second throttle (23) being connected to a second chamber, opposite to the first chamber, of the control piston.

12. A method for cable reeling of an electrically driven underground mining machine, in which method the cable (25) is wound by rotating a reel (1) in a first direction by a hydraulic motor (5) coupled thereto, the hydraulic motor (5) being pressurized by a pump (8), and unwound from the reel (1) by allowing the reel (1) to rotate in an opposite direction in a braked condition by using the hydraulic motor (5) as a hydraulic pump, the method comprising
- during unwinding, generating hydraulic pressure to pressure fluid in the hydraulic motor (5),
- receiving said pressurized pressure fluid in the pump (8) for driving the pump (8),
- operating by the pump (8) a system (33) configured to generate a braking moment, and
- converting said hydraulic pressure into electric, mechanical and/or pressure fluid energy in said system (33).

13. The method as claimed in claim 12, wherein during unwinding of the cable (25), the method comprises
- returning pressure fluid used for driving the pump (8) back from the pump (8) to the hydraulic motor (5).

14. The method as claimed in claim 12 or 13, wherein during winding the cable (25) on the reel (1), the method comprises
- first driving the pump (8) at its maximum delivery,
- when the desired tension level of the cable (25) is achieved, limiting the delivery of the pump, and
- maintaining equilibrium between said delivery and said tension.

15. The method as claimed in any of claims 12 - 14, comprising
- shifting the controlling of the reel (1) in a service stage, and
- controlling the speed of the reel (1) in said service stage by pump proportional valves (11, 12).
